# EUROPEAN PATENT APPLICATION

(11) **EP 2 833 363 A1**
(43) Date of publication of application: **04.02.2015**
(21) Application number: 14179268.9
(22) Date of filing: 31.07.2014
(51) Int. Cl.: G11B 27/034, G11B 27/34

(54) **A creation system for producing synchronised soundtracks for electronic media content**

(30) Priority: 01.08.2013 US 201361861105 P
(71) Applicant: Booktrack Holdings Limited, Auckland 0622 (NZ)
(72) Inventor: Cameron, Paul Charles, 0620 Auckland (NZ); Cameron, Mark Steven, Hong Kong (HK); Wilson, Craig Andrew, 0630 Auckland (NZ); Buer, Mark Anthony, 3010 Rotorua (NZ)
(74) Representative: Harding, Andrew Philip

(57) **Abstract**

A method is provided, of creating, with a hardware system, a synchronised soundtrack for an item of electronic media content in which the playback of the soundtrack is synchronised with the user's reading speed. The method generates a graphical user interface (GUI) on a display comprising a reading display pane displaying at least a portion of the electronic media content in a reading format and a linear progression display pane displaying a linear progression of a range of reading position identifiers corresponding to at least a portion of the electronic media content displayed on the first display pane. User interaction with a GUI of the interface is used to configure audio data for each new audio region of the soundtrack. Both the reading display pane and linear progression display pane are simultaneously updated with graphical representations of the newly configured audio region showing an association between the audio region and the corresponding text region in the electronic media content to which it relates.

## Description

### FIELD OF THE INVENTION

The invention relates to a system and method for creating synchronised soundtracks for electronic media content, such as but not limited to text only or multimedia content comprising text presented in combination with imagery, videos or animations. The playback of the soundtrack is synchronised with the individual reading speed of the user.

### BACKGROUND TO THE INVENTION

To enhance the reading experience, various systems have been proposed in which audio soundtracks relating to the content of text, such as an e-book, are produced and played to the user while they read the text. Some of these systems aim to synchronise the playback of the soundtrack with the user's reading speed.

One such system is described in the applicant's co-pending international PCT patent application publication WO2013/015694, the contents of which is hereby incorporated by reference in its entirety. In this system, a soundtrack for electronic text, such as an e-book, is produced that comprises audio tracks of different types that are configured to play concurrently and/or sequentially while the user is reading the electronic text. Playback of the soundtrack is synchronised with the reading speed of the user. The soundtrack may comprise a combination of different audio types, including ambient noise, sound effects, and background music that are configured to playback at a specific point or over specific portions of the electronic text in a synchronised manner as the user is reading those portions of the electronic text. The soundtrack in WO2013/015694 comprises multiple audio regions that are designated to playback during designated text portions of the electronic text. Each audio region comprises audio data defining the audio track to playback, the start position in the electronic text at which the audio region is to commence playback, and a stop position in the electronic text at which the audio region is to cease playback. In one embodiment described, the electronic text is indexed based on the number of words and the start and stop positions of the audio regions relate to a start and stop word.

WO2013/015694 describes a soundtrack creation system that enables a user to create a synchronised soundtrack for an item of electronic text. The soundtrack creation system utilizes a graphical user interface (GUI) to display the electronic text to the user and allows the user to create each audio region of the soundtrack by highlighting a desired text region and configuring the audio data properties to define the audio track for playback during the text region and any other desired real-time audio playback effects, such as panning or volume envelopes. Created audio regions are represented in the GUI as text underlines in the displayed electronic text. For complex soundtracks having many overlapping audio regions and therefore overlapping text underlines, it can be difficult for the user to quickly refine and edit the audio regions and/or obtain a quick impression of the audio regions configured for the soundtrack in different portions of the electronic text.

In this specification where reference has been made to patent specifications, other external documents, or other sources of information, this is generally for the purpose of providing a context for discussing the features of the invention. Unless specifically stated otherwise, reference to such external documents is not to be construed as an admission that such documents, or such sources of information, in any jurisdiction, are prior art, or form part of the common general knowledge in the art.

### SUMMARY OF THE INVENTION

It is an object of the invention to provide an improved soundtrack creation method/or and system for producing synchronised soundtracks for electronic media content, or which at least provides the public with a useful choice.

In a first aspect, the invention broadly consists in a method of creating with a hardware system a synchronised soundtrack for an item of electronic media content in which the playback of the soundtrack is synchronised with the users reading speed, the soundtrack comprising multiple audio regions for playback over corresponding text regions of the electronic media content, each audio region being defined by audio data indicative of: an audio track for playback in the audio region; a start position in the electronic media content corresponding to the start of the text region where the playback of the audio region is to begin; and a stop position in the electronic media content corresponding to the end of the text region where the playback of the audio region is to cease, the method comprising: loading an electronic media content data file representing the electronic media content into memory of the hardware system; generating a graphical user Interface (GUI) on a display of the hardware system comprising a first display pane (reading display pane) displaying at least a portion of the electronic media content in a reading format and a second display pane (linear progression display pane) displaying a linear progression of a range of reading position identifiers corresponding to at least a portion of the electronic media content displayed on the first display pane; receiving user input from user interaction with the GUI via a user interface of the hardware system for configuring audio data for a new audio region of the soundtrack; updating both the first and second display panes with graphical representations of the newly configured audio region showing an association between the audio region and the corresponding text region in the electronic media content to which it relates; and updating or generating a soundtrack data file in memory of the hardware system comprising the configured audio data for the new audio region.

In a first form, the reading position identifiers of the linear progression display pane are words of the electronic media content. In a second form, the reading position identifiers are characters of the electronic media content. By way of example, a range of the words or characters of the electronic media content may be plotted along a reading position axis of the linear progression display pane. Preferably, the reading position axis (which may be oriented horizontally or vertically depending on the language of the electronic media content) comprises equi-spaced ticks, each tick having a displayed annotation corresponding to a word or character of the electronic media content. The reading position axis has a configurable resolution to vary the range of reading position identifiers displayed such that each tick may be configured to correspond to each word or alternatively every n^{th} word, where n > 1.

In other forms, the reading position identifiers of the linear progression display pane may comprise a combination of words or characters of the electronic media content in combination with symbols or icons or notations representing or corresponding to imagery of the electronic media content, if it comprises both text and imagery. In these forms, the symbol or icon or notation representing or corresponding to each item of imagery may be designated to stretch across a number of ticks, the number corresponding or being proportional to the length of time the reader is expected to view the image (whether static or moving).

In one embodiment, the graphical representations of the audio regions in the reading display pane are a different type to the graphical representations of the audio regions in the linear progression display pane.

In one form, the graphical representations of the audio regions each have a length component corresponding to the length of their associated audio region. Preferably, each graphical representation of an audio region has a start point and end point corresponding to the start position and stop position in the electronic media content for the text region associated with the audio region, and the length component corresponds to the portion of the electronic media content extending between the start and end points.

In one form, the graphical representations of the audio regions in the reading display pane are in the form of underlines within the displayed portion of electronic media content, each underline representing an audio region extending from the start position to the stop position of the text region corresponding to the audio region. In any portion of the displayed electronic media content there may be one underline or many stacked overlapping underlines depending on whether one or multiple audio regions are configured to that portion of the electronic media content. Preferably, any overlapping underlines representing overlapping audio regions in the soundtrack are coloured or shaded with a unique colour or shade to enable each to be distinguished.

In one form, the graphical representations of the audio regions in the linear progression display pane are displayed in the form of a bar chart, with each audio region represented by a bar plotted relative to the linear progression of reading position identifiers to extend from the start position to the stop position of the text region corresponding to the audio region. In some embodiments, the bars are horizontally oriented against a horizontally oriented linear progression of reading position identifiers. In other embodiments, the bars are vertically oriented, if the linear progression of reading position identifiers is vertically oriented.

Preferably, the method further comprises displaying a visual representation of any audio playback effect data configured for each audio region in the linear progression display pane. By way of example, the audio playback effect data may represent a panning or volume envelope corresponding to panning or volume effects to be applied during audio region playback. In a first form, the audio playback effect data may be represented as a separate graphical item alongside the audio region graphical representation, or alternatively may be integrated with the audio region graphical representation. By way of example, one or more symbols may be displayed on or alongside the audio region graphical representation to represent one or more playback effects that are configured for the audio region, such as panning or volume envelopes, fading in/out effects or the like. Any such configured playback effects may also be represented by shaping or shading of the audio region graphical representations.

Preferably, the method further comprises displaying a graphical representation of the waveform of the audio track file associated with the audio region in the linear progression display pane. The waveform graphical representation may be a separate item displayed alongside the audio region graphical representation, or alternatively may be integrated with the audio region graphical representation.

Preferably, the method further comprises receiving user input from the user interface for configuring or editing an audio region via user interaction with either of the first or second display panes, and updating the graphical representations of the re-configured audio region on both display panes simultaneously to reflect any modifications. In one form, either or both of the first and second display panes comprises interactive graphical representations of the configured audio regions which may be directly manipulated on screen to re-configure or edit at least one aspect of the audio data of each audio regions. By way of example, the user input may change the start and/or stop positions of an audio region via on-screen manipulation (in either the first or second display pane) of the start and/or end points of the graphical representation of the audio region, and the method comprises simultaneously updating the graphical representation of a manipulated audio region in the second display pane based on manipulations in the first display pane, or vice versa.

Preferably, the method further comprises receiving user input from the user interface indicative of a configurable zoom setting for the linear progression display pane, and updating the linear progression display pane to alter the range of reading position identifiers displayed relative to the portion of the electronic media content displayed in the reading display pane based on the zoom setting. The zoom setting may have a default of 1:1 in which the range of reading position identifiers displayed in the linear progression display pane matches the portion of electronic media content displayed in the reading display pane, such that both display panes represent the same quantity of the electronic media content. In one form, the zoom setting may be a zoom-in setting with a zoom-in value, and the method comprises modifying the linear progression display pane to display a smaller range of reading position identifiers which corresponds to only a portion of the electronic media content displayed in the reading display pane, the level of zoom being dictated by the zoom-in value. In another form, the zoom setting may be a zoom-out setting with a zoom-out value, and the method comprises modifying the linear progression display pane to display a larger range of reading position identifiers which corresponds to more of the electronic media content than the portion displayed in the reading display pane.

Preferably, the method further comprises providing a preview soundtrack playback of the configured audio regions of the soundtrack over an audio output system associated with the hardware system in which the audio regions of the soundtrack are played back and triggered based on an adjustable reading position variable representing the users expecting reading position in the electronic media content displayed in the reading display pane, the reading position variable traversing the electronic media content at a rate based on a configurable user reading speed setting. More preferably, the method further comprises displaying a graphical reading position identifier in the reading display pane that corresponds to the reading position variable. In one form, the method further comprises continuing the preview soundtrack playback for any remaining non-displayed portion of the electronic media content when the reading position variable reaches the end of the displayed portion of the electronic media content in the reading display pane, with or without displaying the remaining portion of the electronic media content in the reading display pane.

Preferably, the method further comprises receiving user input from the user interface to change the portion of electronic media content displayed in the reading display pane, and updating the displayed portion of electronic media content in the reading display pane based on the received user input. In one form, the user input may be via manipulation of a scroll bar or page turn icon displayed in the reading display pane or other scroll input (such as via scroll wheel on a control mouse of the user interface). More preferably, the method comprises simultaneously updating the range of reading position identifiers displayed in the linear progression display pane to correspond or match the new portion of electronic media content displayed on the reading display pane. Even more preferably, the method comprises updating the linear progression display pane to reflect the new portion of media content displayed in the reading display pane based on a configurable zoom setting such that the range of reading position identifiers displayed in the linear progression display pane may correspond to the same, more than, or less than the portion of electronic media content displayed in the reading display pane based on the zoom setting.

Preferably, the method further comprises automatically displaying or maintaining a highlight overlay in the reading display pane that highlights the portion of electronic media content that corresponds to the portion that is displayed/represented in the linear progression display pane.

Preferably, the method further comprises receiving user input from the user interface to highlight a portion of the electronic media content displayed in the reading display pane, and updating both the reading display pane and linear progression display pane to simultaneously highlight the selected electronic media content.

Preferably, the method further comprises receiving user input from the user interface to alter the start and/or stop positions of an audio region, and updating the audio data to reflect the altered start and/or stop positions based on the user input. In one form, the graphical representations of the audio regions in the reading display pane and/or linear progression display pane are provided with interactive handle icons at each end of the graphical representation corresponding to the start and end of the audio region, the handle icons being manipulatable (e.g. draggable or re-locatable) on the screen to alter the start and/or stop positions.

Preferably, the method further comprises providing a third display pane (audio region summary display pane) in the GUI comprising visual representations of at least a portion of the audio data configured for a selected audio region displayed in the reading display pane and/or linear progression display pane. More preferably, the method further comprises receiving user input from the user interface of a selected audio region and updating the audio region summary display pane with the audio data for the selected audio region.

Preferably, the method further comprises receiving user input from the user interface indicative of a selected audio region and updating the reading display pane and linear progression display pane to highlight the portion of the electronic media content and reading position identifiers respectively corresponding to the selected audio region. More preferably, the method further comprises updating the audio region summary display pane to reflect the audio data of the selected audio region. In one form, the user input indicative of a selected audio region may be achieved through the user selecting (e.g. clicking via a mouse pointer or touching in the case of a touchscreen) on a word or position in the electronic media content displayed on the reading display pane. Preferably, in the case where the selected reading position (e.g. word) relates to more than one audio region (e.g. a position where overlapping audio regions exist), the method further comprises cycling the selection automatically through each of the overlapping audio regions in turn in response to successive user selection (e.g. clicks or touches) on the word. For example, for a word having two overlapping audio regions, sequential clicking or touching on the word or in the vicinity of word the selection between each of two audio regions. If there are more than two audio reasons, then the method progressively cycles the selection to each audio region in turn for each successive click or touch, to enable the user to select the desired audio region.

Preferably, the method further comprises receiving user input from user interaction with the GUI via the user interface for configuring multiple audio regions, and updating the first and second display panes and the soundtrack data file for each new audio region configured. More preferably, the method further comprises outputting or storing the soundtrack data file once all audio regions of the soundtrack have been configured.

In one embodiment, the reading display pane and linear progression display pane are presented in a horizontally split display window. In one form, the linear progression display pane is located above the reading display pane. In alternative embodiments, the reading display pane and linear progression display panes are presented on a vertically split display window, or alternatively the display panes may be arranged relative to each other in any arbitrary configuration.

In a second aspect, the invention broadly consists in a soundtrack creation system for creating a synchronised soundtrack for an item of electronic media content in which the playback of the soundtrack is synchronised with the users reading speed, the soundtrack being defined by multiple audio regions, each audio region being defined by audio data indicative of: an audio track for playback in the audio region; a start position in the electronic media content corresponding to where the playback of the audio region is to begin; and a stop position in the electronic media content corresponding to where the playback of the audio region is to cease, the system comprising: a display configured to display the electronic media content; a user interface configured to receive user input; an audio output system that is operable to generate audio output for the user to hear; memory configured to store the soundtrack as it is generated; a processor configured to: load an electronic media content data file representing the electronic media content into memory; generate a graphical user Interface (GUI) on the display comprising a first display pane (reading display pane) displaying at least a portion of the electronic media content in a reading format and a second display pane (linear progression display pane) displaying a linear progression of a range of reading position identifiers corresponding to at least a portion of the electronic media content displayed on the first display pane; receiving user input from user interaction with the GUI via the user interface for configuring audio data for a new audio region of the soundtrack; updating both the first and second display panes with graphical representations of the newly configured audio region showing an association between the audio region and the corresponding text region in the electronic media content to which it relates; and updating or generating a soundtrack data file in memory comprising the configured audio data for the new audio region.

The second aspect of the invention may have any one or more of the features mentioned in respect of the first aspect of the invention.

In a third aspect, the invention broadly consists in a computer-readable medium having stored thereon computer executable instructions that, when executed on a processing device, cause the processing device to perform the method of the first aspect of the invention.

The third aspect of the invention may have any one or more of the features mentioned in respect of the first aspect of the invention.

Also described is a fourth aspect comprising a method of generating on a display screen of a hardware system a graphical user interface (GUI) representing a synchronised soundtrack for an item of electronic media content in which the playback of the soundtrack is synchronised with the users reading speed, the soundtrack comprising multiple audio regions for playback over corresponding text regions of the electronic media content, each audio region being defined by audio data indicative of: an audio track for playback in the audio region; a start position in the electronic media content corresponding to the start of the text region where the playback of the audio region is to begin; and a stop position in the electronic media content corresponding to the end of the text region where the playback of the audio region is to cease, the method comprising: receiving an electronic media content data file representing the electronic media content and loading it into memory of the hardware system; receiving a soundtrack data file comprising the audio data of the audio regions of the soundtrack and loading it into memory of the hardware system; processing the electronic media content data file and soundtrack data file in a processor of the hardware device to generate a GUI on the display screen of the hardware system comprising: a first display pane (reading display pane) displaying at least a portion of the electronic media content in a reading format and a second display pane (linear progression display pane) displaying a linear progression of a range of reading position identifiers corresponding to at least a portion of the electronic media content displayed on the first display pane, and wherein both display panes are provided with graphical representations of the audio regions of the soundtrack, each graphical representation showing an association between the audio region and the corresponding text region in the electronic media content to which it relates.

The fourth aspect of the invention may have any one or more of the features mentioned in respect of the first to third aspects of the invention.

Also described is a fifth aspect comprising a computer-readable medium having stored thereon computer executable instructions that, when executed on a processing device, cause the processing device to perform the method of the fourth aspect of the invention.

Also described is sixth aspect comprising a method of creating with a hardware system a synchronised soundtrack for an item of electronic media content in which the playback of the soundtrack is synchronised with the users reading speed, the soundtrack comprising multiple audio regions for playback over corresponding text regions of the electronic media content, each audio region being defined by audio data indicative of: an audio track for playback in the audio region; a start position in the electronic media content corresponding to the start of the text region where the playback of the audio region is to begin; and a stop position in the electronic media content corresponding to the end of the text region where the playback of the audio region is to cease, the method comprising: loading an electronic media content data file representing the electronic media content into memory of the hardware system; generating a graphical user Interface (GUI) on a display of the hardware system comprising a linear progression display pane displaying a linear progression of a range of reading position identifiers corresponding to at least a portion of the electronic media content; receiving user input from user interaction with the GUI via a user interface of the hardware system for configuring audio data for a new audio region of the soundtrack; updating the linear progression display pane with a graphical representation of the newly configured audio region showing an association between the audio region and the corresponding text region in the electronic media content to which it relates; and updating or generating a soundtrack data file in memory of the hardware system comprising the configured audio data for the new audio region.

Optionally, the method may further comprise generating, and simultaneously displaying with the linear progression display pane, a reading display pane in the GUI displaying at least a portion of the electronic media content in a reading format.

The sixth aspect may comprise any one or more feature mentioned in respect of the first aspect of the invention.

Also described is a seventh aspect comprising a computer-readable medium having stored thereon computer executable instructions that, when executed on a processing device, cause the processing device to perform the method of the sixth aspect of the invention.

The seventh aspect of the invention may have any one or more of the features mentioned in respect of the sixth aspect of the invention.

Also described is an eighth aspect comprising a soundtrack creation system for creating a synchronised soundtrack for an item of electronic media content in which the playback of the soundtrack is synchronised with the users reading speed, the soundtrack being defined by multiple audio regions, each audio region being defined by audio data indicative of: an audio track for playback in the audio region; a start position in the electronic media content corresponding to where the playback of the audio region is to begin; and a stop position in the electronic media content corresponding to where the playback of the audio region is to cease, the system comprising: a display configured to display the electronic media content; a user interface configured to receive user input; an audio output system that is operable to generate audio output for the user to hear; memory configured to store the soundtrack as it is generated; a processor configured to: load an electronic media content data file representing the electronic media content into memory; generate a graphical user Interface (GUI) on the display comprising a linear progression display pane displaying a linear progression of a range of reading position identifiers corresponding to at least a portion of the electronic media content; receiving user input from user interaction with the GUI via the user interface for configuring audio data for a new audio region of the soundtrack; updating the linear progression display pane with a graphical representation of the newly configured audio region showing an association between the audio region and the corresponding text region in the electronic media content to which it relates; and updating or generating a soundtrack data file in memory comprising the configured audio data for the new audio region.

The eighth aspect may comprise any one or more feature mentioned in respect of the second aspect of the invention.

### Definitions

The term "soundtrack" as used in this specification and claims is intended to mean, unless the context suggests otherwise, a soundtrack for playback while reading electronic media content and of the type described in WO2013/015694 which comprises multiple audio regions that are configured for playback at predetermined reading positions or regions within the electronic media content, and where the playback timing of the soundtrack is synchronized with the user based on their estimated reading position and/or reading speed.

The phrase "reading format" as used in this specification and claims, is intended to mean, unless the context suggests otherwise, displaying the electronic media content in a form or format identical or substantially similar to the intended display format of the electronic media content for reading. For example, in the context of electronic media content in the form of an e-book, the electronic text of the e-book may be displayed identical to or substantially similar to how it would be displayed by e-reader software or an e-reader device such as in pages or continuous scrollable text, or for electronic media content in the form of a webpage, the webpage may be displayed identical to or substantially similar to how it would appear in an internet browser, and wherein the reading format is dependent on the language, e.g. for the English language the text is displayed horizontally from left to right and in rows, with the rows being ordered top to bottom, but for Japanese the text is arranged in columns from top to bottom, and with the columns ordered left to right on the page.

The phrase "linear progression" as used in this specification and claims is intended to mean, unless the context suggests otherwise, displaying reading position identifiers corresponding to the electronic media content in a line along a reading position axis, typically extending horizontal for English language text but could alternatively extend vertically for say Japanese language text or any other orientation if desired. By way of example, if the reading position identifiers are words or characters of the electronic media content, these may be plotted along a reading position axis in an equi-spaced manner, but alternatively the reading position identifiers could be in any other reference position format or form, such as but not limited to text position co-ordinates or Conical Fragment Identifier (CFI) values in the context of ePub or similar electronic text documents.

The phrase "reading position identifier" as used in this specification and claims is intended to mean, unless the context suggests otherwise, a reference, index value (e.g. word count or character count), word or character of the text, text position coordinates, CFI values, or any other text positional reference scheme by which the start and stop positions of the audio regions of the soundtrack have been defined.

The phrase "graphical representation" as used in this specification and claims is intended to mean, unless the context suggests otherwise, any form of representation in computer graphics including but not limited to highlights, underlines, shapes, bars, icons or other graphical identifiers, whether continuous or discontinuous (e.g. extending over multiple lines on the reading display pane).

The phrase "electronic media content" as used in this specification and claims is intended to mean, unless the context suggests otherwise, any electronic media content comprising electronic text, whether alone or in combination with embedded static or animated imagery or graphics (e.g. video), the electronic media content being in any format or file-type capable of being rendered on an electronic display, and including, but not limited to, an electronic book or e-book, a webpage, digital video, comic, or slide show presentation.

The phrase "hardware system" as used in this specification and claims is intended to mean, unless the context suggests otherwise, any form of computing, processing or programmable electronic device, platform or system including, but not limited to, portable or non-portable consumer electronic devices such as smartphones, cellphones, tablets, e-Reader or e-book devices, laptops, and notebooks, gaming machines or consoles, server, smart televisions, general purpose computers such as desktop computers, specific purpose computers or the like, and is intended to include one or more linked or communicating hardware or processing devices or systems which work together.

The term "network" as used in this specification and claims is intended to mean, unless the context suggests otherwise, any data network or data communication channel or combination of networks or channels over which a hardware system may send and/or receive data to another device, whether a remote server or servers or other hardware systems, including, but not limited to, the internet, an intranet or extranet, whether accessed over a wired or wireless medium or a combination of these.

The term "comprising" as used in this specification and claims means "consisting at least in part of'. When interpreting each statement in this specification and claims that includes the term "comprising", features other than that or those prefaced by the term may also be present. Related terms such as "comprise" and "comprises" are to be interpreted in the same manner.

As used herein the term "and/or" means "and" or "or", or both.

As used herein "(s)" following a noun means the plural and/or singular forms of the noun.

The invention consists in the foregoing and also envisages constructions of which the following gives examples only.

In the following description, specific details are given to provide a thorough understanding of the embodiments. However, it will be understood by one of ordinary skill in the art that the embodiments may be practiced without these specific details. For example, software modules, functions, circuits, etc., may be shown in block diagrams in order not to obscure the embodiments in unnecessary detail. In other instances, well-known modules, structures and techniques may not be shown in detail in order not to obscure the embodiments.

Also, it is noted that the embodiments may be described as a process that is depicted as a flowchart, a flow diagram, a structure diagram, or a block diagram. Although a flowchart may describe the operations as a sequential process, many of the operations can be performed in parallel or concurrently. In addition, the order of the operations may be rearranged. A process is terminated when its operations are completed. A process may correspond to a method, a function, a procedure, a subroutine, a subprogram, etc., in a computer program. When a process corresponds to a function, its termination corresponds to a return of the function to the calling function or a main function.

### BRIEF DESCRIPTION OF THE DRAWINGS

Preferred embodiments of the invention will be described by way of example only and with reference to the drawings, in which:
**Figure 1** is a schematic illustration of a portion of text and the associated audio regions of a soundtrack synchronised for playback during the reading of the electronic text;
**Figure 2** is a schematic illustration similar to Figure 1 except showing a soundtrack of the invention configured for electronic media content comprising text and images;
**Figure 3** is a schematic block diagram of a soundtrack creation system in accordance with an embodiment of the invention;
**Figure 4** is a screenshot of a graphical user interface (GUI) of the soundtrack creation system in accordance with an embodiment of the invention having an electronic display window comprising a lower reading display pane and an upper linear progression display pane;
**Figure 5** is a screenshot of the GUI of Figure 4 showing dual highlighting of the portion of text in both the upper and lower display panes;
**Figure 6** is a screenshot of the GUI of Figure 4 in which the upper and lower display panes have a 1:1 zoom setting such that they display the same portion of text;
**Figure 7** is a screenshot of the GUI of Figure 4 in which the upper display pane is zoomed-out relative to the lower display pane;
**Figure 8** is a screenshot of the GUI of Figure 4 in which the upper display pane is zoomed-in relative to the lower display pane;
**Figure 9** is a screenshot of the GUI of Figure 4 in which the panning envelope is displayed as a line plot alongside the audio region bar in the upper linear progression display pane in a first form of the invention;
**Figure 10** is a screen shot of the GUI of Figure 9 in which the line plots of all panning envelopes of the audio regions are displayed on the upper linear progression pane;
**Figure 11** is a screenshot of the GUI of Figure 4 in which a representation of the panning envelope is integrated with the representation of the audio region as a combined line plot in a second form of the invention;
**Figure 12** is a screenshot of the GUI of Figure 4 in which a representation of the panning envelope is integrated with the representation of the audio region as a filled line plot in a third form of the invention; and
**Figure 13** is a screenshot of the GUI of Figure 4 in which the audio track file waveforms are displayed alongside their respective audio regions in the upper linear progression display pane.

### DETAILED DESCRIPTION OF PREFERRED EMBODIMENTS

### 1. Overview of synchronised soundtracks

This invention relates to delivery of soundtrack of the type described in WO2013/015694, as referred to above. The soundtracks are created to enhance the user's reading experience for an item of electronic text.

The soundtracks may be applied to electronic text in any format or file-type, including but not limited to those associated with the following file extensions: aeh, djvu, epub, fb2, html, xhtml, azw, lit, prc, mobi, exe, pdb, txt, pdb, pdf, ps, rgo, pdb, tr2, tr3, wol, rtf, doc, docx, asc, lit, wri, odt, text, pwi, rtx, sdw, strings, utf8, utf16, wp*, wpw, wri, wtx, asc, csv, lwp, dtp, indd, pmd, ppp, pub, fm, and any type of markup language types, including but not limited to SGML, HTML, XHTML, HTML5, XML, and LaTex. The electronic text may be in the form of any electronic media content whether comprising text only or text in combination with imagery or graphics, whether static or moving (e.g. video or other animations). By way of example, but not limited to, the electronic media content may be in the form of an e-book, a webpage, or any other electronic media content format.

The soundtrack is customised to the electronic media content and in particular customized to the content of the electronic text to enhance the reading experience for a reader of the electronic text. The soundtrack may comprise audio tracks of different types and may be configured to play concurrently, sequentially, or both while the user is reading the electronic text. Playback of the soundtrack is synchronized with the reading speed of the user. In one example, the electronic text may be a fiction or non-fiction book, and the soundtrack may comprise a combination of different audio types, including ambient noise, sound effects, and background music that may be configured to play back at a specific point or over specific portions of the electronic text in a synchronized manner as the user is reading those portions of the electronic text.

The soundtrack comprises multiple audio regions that are designated to playback during designated text portions of the electronic text. Each audio region comprises audio data defining the audio track to playback and audio properties defining the desired nature of the playback. The audio data specifies a start text position (in the form of a reading position identifier) in the electronic text at which the audio region is to commence playback and a stop text position at which the audio region is to cease playback. In one embodiment, the electronic text is designated a numerical text index based on the number or words or characters in the electronic text, and the start and stop text positions are defined by corresponding start and stop index values respectively. In one example, the indexing of the text is based on the number of words in the electronic text such that each word has a unique index value representing its position in the electronic text. The index values for each word may correspond to their word number or word count in the electronic text. In this example, the audio regions playback between start and stop index values representing the selected start and stop words in the electronic text for that audio region.

When the user is reading the electronic text, a reading position counter or identifier is maintained which corresponds to text position in the electronic text at which the user is estimated as currently reading. The reading position counter increments or changes at a rate at least partially based on the user's reading speed. This reading position counter allows the playback of the audio regions of the soundtrack to be synchronized with the user's reading speed such that playback of an audio region is triggered when the reading position counter matches the start index value of the start word for the audio region, and likewise ceases when the reading position counter matches the stop index value of the stop word of the audio region.

In alternative embodiments, other reading position referencing scheme may be employed in contrast to word or character based indexing. In other embodiments, the start and stop positions of each audio region may be defined by any other document or text position referencing scheme or system. One such example is the ePub canonical fragment identifier (CFI). In such an example, the start and stop positions in the audio region will be defined by the CFI parameter or ranges, and a reading position variable would be maintained in the CFI format which changes or increment based on the user's reading speed to trigger the playback of the audio regions of the soundtrack when their CFI value match the reading position variable.

The sound track comprises multiple audio regions and playback of two or more regions may partially or entirely overlap such that two or more audio regions can playback concurrently if desired. The soundtrack is provided with multiple channels for playback and overlapping audio regions are designated different channels in the set of available channels to allow for concurrent playback. This enables different audio tracks, such as sound effects, ambient noise, or background music to be concurrently played and mixed together to provide an overall soundtrack that enhances the user's reading experience for that particular electronic text. Typically, the audio data for each audio region includes an audio type, such as "music", "ambience", or "effect". The selected audio type is intended to define the nature of the audio region. For example, if an audio region is for background music, then the audio type selected will be "music". If the audio region is a sound effect, then the "effect" audio type is selected. If the audio region is intended to be an ambient sound or noise, then the "ambience" audio type is selected.

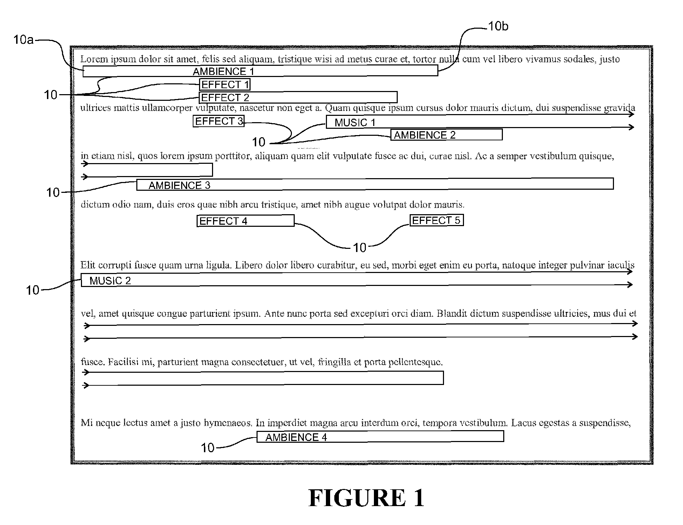

By way of example, Figure 1 shows a portion of electronic media content comprising electronic text only. Figure 1 also overlays the text with a schematic representation of a number of audio regions 10 configured for playback during reading of the electronic text in the schematic representation, the audio regions 10 are each represented by a bar or underline that extends below the portion of text to which it relates. The start of each bar or underline of the audio region represents the start position at which the audio track of that audio region will commence playback and the end 10 represents the position in the electronic text at which the audio track of the audio region will cease playback. Each audio region may extend over a single word or group of words, a line, multiple lines or even pages. As shown the audio regions may overlap such that they playback concurrently.

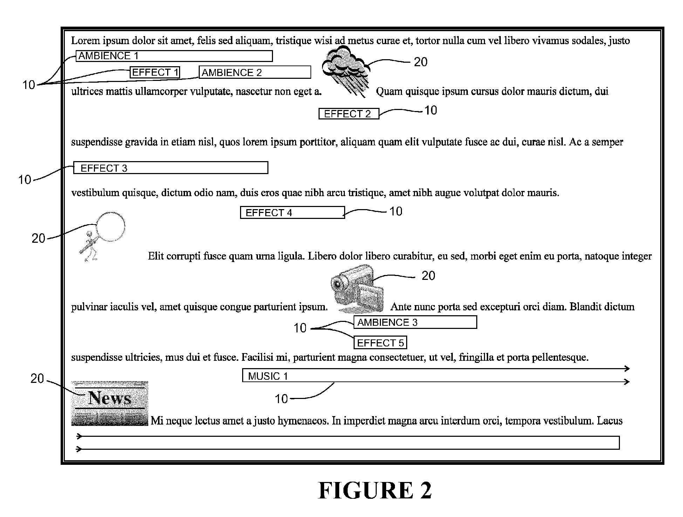

Referring to Figure 2, the electronic media content may comprise multimedia content comprising text and imagery, whether static or moving. Figure 2 shows such an electronic text containing static images 20. For such electronic media content, the soundtrack audio region may have start and stop positions which either correspond to text or imagery. For example an audio region may be configured to start on a particular word, and then end when a user is expected to be looking at a particular image embedded within the text. Alternatively, an audio region may be configured to commence playback when a user is expected to be viewing a particular embedded image (whether static or video).

### 2. Soundtrack creation system

### Overview

The invention relates to an improved graphical user interface (GUI) for creating a synchronised soundtrack for an item of electronic media content. The GUI provides a unique dual graphical view of the soundtrack data being configured to enable more efficient editing and refining of the soundtrack during creation or editing a pre-existing soundtrack. The soundtrack creation process for the creation and configuration of the audio regions of the soundtrack substantially follows that described with reference to Figures 1-14 in WO2013/015694, which is hereby incorporated by reference, but utilises the improved GUI to be described. For clarity, the following embodiment is described in relation to creating a soundtrack for electronic media content comprising text only. However, it will be appreciated that the system may be adapted for creating soundtracks for electronic media content comprising text with embedded imagery.

The enhanced GUI graphically represents configured audio regions of the soundtrack in two different display panes or panels in two different formats to enable a user to easily navigate the electronic media content for creating and editing audio regions of the soundtrack and/or to enable the user to customise their view of the graphically represented soundtrack to either gain an overall or focussed impression of the soundtrack configuration over any particular large or small portion of the electronic media content. The dual display panes or panels are presented simultaneously on the display screen of the hardware system and are both interactive to allow direct user manipulation of the configured audio regions via interaction with the graphical representations in the panes. Each display pane is updated in real time to reflect any modifications made to the audio regions of the soundtrack via either display pane such that the latest audio region data of the soundtrack is mirrored in both panes.

### Hardware

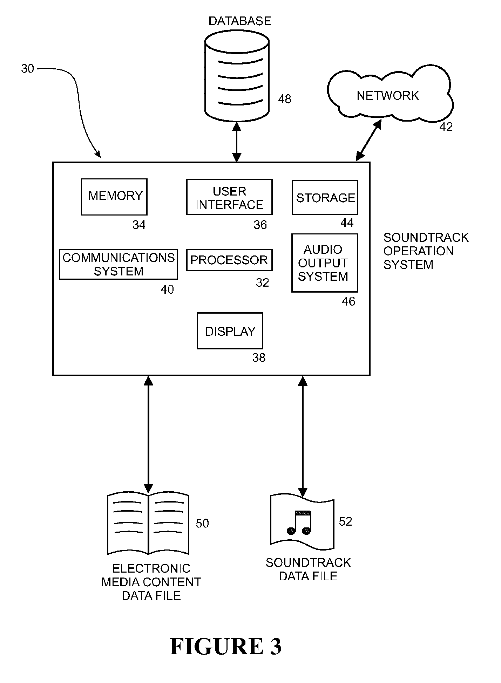

The soundtrack creation system and process is typically provided in the form of software or a programmable application operating or running on a hardware system. Referring to Figure 3, a typical hardware system 30 is depicted for implementing the soundtrack creation system and process. The hardware system may comprise a processor 32, memory 34, a user interface 36 such as a keyboard, mouse, touch screen display, control buttons, voice activation, or similar, a display 38 or display screen, such as an LED display or similar, a communications system 44 connecting to external servers or databases or systems directly or indirectly over a network 42, storage 44 for storing electronic files, and an audio output system 46 which can deliver sound to the user via integrated or external speakers, headphones, earphones or similar. Optionally, the soundtrack creation system 30 may interact with one or more external databases 48 or alternatively integrated databases containing files, such as audio track files.

In operation, the soundtrack creation system 30 may either load an electronic media content data file 50 for which a synchronised soundtrack is to be created by retrieving and loading the data file from integrated storage, an external database, a connected device, downloading from a server, from an accessible external storage medium (e.g. CD-ROM, flash drive, USB stick, or similar) or the like. Alternatively, new electronic media content may be generated by the user in a new electronic media content data file, for example the user may write their own story or generate their own webpage content to which they wish to create a corresponding synchronized soundtrack. The soundtrack creation system may be used to create a new soundtrack for an item of electronic media content or alternatively may be operated to load a pre-existing soundtrack for editing or modifying.

The soundtrack creation system may be in the form of an independent application program running on the hardware system, an add-on or plug-in to another application program such as a document editor or viewer, e-reader software, or internet browser, an embedded application running on a website accessed by an internet browser, or any other software implementation.

### Graphical user interface (GUI)

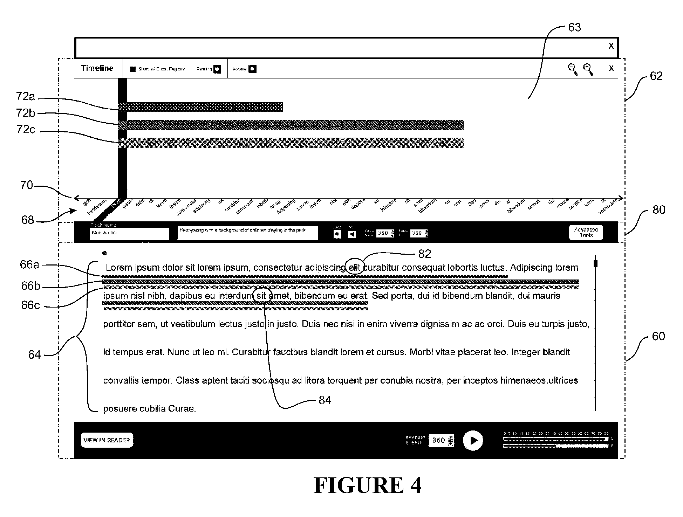

The features and functionality of the GUI of the soundtrack creation system will now be explained in further detail with reference to Figures 4-13.

### Display panes

Referring to Figure 4, the GUI is in the form of a split window format comprising a first display pane 60 and a second display pane 62. In this embodiment, the first display pane is located below the second display pane in a horizontal split window, although this may be reversed if desired. It will also be appreciated that any other arrangement or configuration of the panes may alternatively be used, including but not limited to a vertical split window.

The first display pane 60 is a reading display pane that is configured to display at least a portion of the electronic media content 64 in a reading format identical to or substantially similar to the format in which the electronic media content would be read on a display or intended display device or software system. For example, if the electronic text of the electronic media content is in the English language, the text is displayed in lines of words ordered from left to right, but it will be appreciated that the displayed reading format is language dependent and hence the reading display pane could display the text horizontally or vertically as required. The portion of the electronic media content displayed may be controlled or selected by the user via scrolling, page turns, navigation and/or chapter menus, or any other navigational user inputs for traversing electronic text on a display screen. Graphical representations 66a-66c of the configured audio regions of a soundtrack are depicted in the reading display pane 60. In this embodiment, the graphical representations are in the form of text underlines. In particular, each audio region is represented by a text underline that extends under the text region to which the audio region relates, i.e. it extends from the configured start position to the stop position in the electronic text defined for the audio region. This creates an associated between the audio region graphical representation and the text region to which it relates. In the example shown in Figure 4, three audio regions are shown 66a-66c. Each of the text underlines 66a-66c represents an audio region of the soundtrack that has been created. In particular, the text underlines represent graphically the associated text region over which an audio region will playback its configured audio track file. As shown, the text underlines have a length component that corresponds to the length of the audio region or text region to which they correspond.

The second display pane 62 is a linear progression display pane configured to display a range of ordered reading position identifiers 68, the range corresponding to at least a portion of the electronic media content 64 displayed on the reading display pane 60. In this embodiment, the reading position identifiers correspond to the same positional reference form used to define the start and stop positions of the audio regions. In this embodiment, the start and stop positions of the audio regions are defined based on a word index such that each audio region begins at a designated start word and ends on a designated stop word, and the words may be represented by an index value such as the word count value. Preferably, the linear progression of the words 68 in the linear progression display pane 62 is displayed along a reading position axis 70. The orientation of the axis may be altered depending on the language of the electronic text. For example, a horizontal oriented axis may be used for English language text, but a vertically oriented axis may be used for Japanese language text. In this embodiment, the reading position axis comprises equi-spaced ticks (which may be selectably visible or hidden), and each tick is annotated with a reading position identifier, such as a word from the electronic text. Effectively the reading position axis represents a reading timeline that presents the words of the electronic text in an ordered linear progression along the axis in a single line, which is scrolled left or right to correspond to the portion of the electronic text displayed in the reading display pane 60. The reading timeline duration during playback is dependent on the user's reading speed. The resolution of the reading position axis may be altered such that each tick may be configured to correspond to each word or alternatively every n^{th} word, where n is selected to be greater than one. Graphical representations 72a-72c of the audio regions associated with the range of reading position identifiers (which in this case are words of the electronic text) are also depicted in the linear progression display pane 62. In this embodiment, the graphical representations 72a-72c are in the form of a bar chart plotted against the reading position axis in a bar chart region 63. In particular, each audio region is depicted by its own horizontal bar 72a-72c. It will be appreciated vertical bars may be used if a vertical oriented reading position axis is employed for text of a different language, like Japanese.

Optionally, the GUI may also be provided with a third display pane in the form of an audio region summary display pane 80, which in this embodiment is situated between the two main display panes 60,62, but could alternatively be located or reside at any other suitable location on the display screen. The audio region summary display pane 80 comprises one or more visual representations of information about at least a portion of the audio data configured for a selected audio region displayed in the reading display pane or linear progression display pane 62. By way of example, the audio data displayed in the audio region summary pane 80 may include the audio track name and an associated description about the nature of the audio track file, any loop or volume settings, fade in/out settings or the like. The audio region summary display pane 80 may also comprise one or more integrated buttons or tools which launch one or more configuration windows for the selected audio region in which one or more of the audio settings for the audio region can be configured in a manner similar to that described in WO2013/015694.

### Creating a soundtrack

The soundtrack creation system may be used to either create a new soundtrack for an item of electronic media content or alternatively to reconfigure a previously created soundtrack. When creating a new soundtrack, the soundtrack creation system opens a new soundtrack data file and stores it in memory ready for receiving new audio data relating to the configuration of the audio regions of the soundtrack. When reconfiguring a pre-existing soundtrack, the soundtrack creation system is configured to load the soundtrack data file from any accessible integrated or external source into memory ready for editing and/or reconfiguration of the audio regions, which may include inserting new audio regions, modifying existing audio regions, or deleting existing audio regions.

When creating a new soundtrack, the user operates the soundtrack creation system to load an electronic media content data file representing the electronic media content from an integrated or external source into memory of the hardware system. Alternatively, the reading display pane 60 may be a text editor or creator into which the user may create a new item of electronic media content, for example they might write their own literary work to which they wish to create a soundtrack.

In another form, when loading a pre-existing soundtrack data file, the soundtrack creation system may automatically retrieve and load the associated or corresponding electronic media content data file into memory of the hardware system for display in the display panes 60, 62. In yet another form, the soundtrack data file may be provided as part of a multimedia data file that comprises both the soundtrack data and the electronic media content data, and the soundtrack creation system may load and process such a multimedia data file to extract the electronic media content for display and soundtrack data for display of the audio regions in the display panes 60,62.

To create each new audio region, the user selects in the reading display pane 60 or linear progression display pane 62 the desired text region over which the audio region is to playback by highlighting the desired text region using the user interface, such as highlighting the text using a mouse pointer or touch input via a touchscreen display interface. Upon selection of the text region, the soundtrack creation system generates an audio region configuration pop-up interface window (not shown) which displays the configurable settings for that audio region and automatically loads the start word and stop word based on the highlighted text. Via this configuration interface the user may select the audio track file to be played in the audio region, configured any playback effect settings such as fade-in and fade-out settings and/or real-time playback effects such as volume and/or panning envelopes, looping or the like as described in WO2013/015694. Once configured, a graphical representation (e.g. like those shown at 66a-66c and 72a-72c) of the audio region is automatically generated and displayed in each of the reading display pane 60 and linear progression display pane 62.

To edit, modify or reconfigure an audio region, the audio region is first selected in either of the display panes 60,62. For example, in the linear progression display pane 62, the audio region may be selected for reconfiguration by clicking or touching in the case of a touch screen interface directly on the desired bar 72a-72c in the bar chart representing the desired audio region to be selected. In the reading display pane 60, an audio region may be selected by clicking or touching on a word or position in the electronic media content corresponding to the location of the desired audio region, i.e. by selecting one of the words associated with the text underline graphical representation or the graphical representation itself. In situations where a position or word in the electronic media content comprises two or more overlapping text underlines representing two or more overlapping audio regions associated with that word or position in the electronic media content displayed, the soundtrack creation system is configured to automatically cycle through the selection of the audio regions in response to each successive click or touch input on the word or position. For example, if the user selected word 82, which has three associated audio regions 66a-66c, each successive click or touch input on word 82 will cycle the selection successively through each of the audio regions 66a-66c. For example, on the first click audio region 66a is selected, on the second click audio region 66b is selected, on the third click audio region 66c is selected, and on the fourth click the selection cycles or loops back to audio region 66a being selected and so on. If word 84 is selected in which there are two audio regions, each successive click alternates between the two audio regions 66b and 66c being selected.

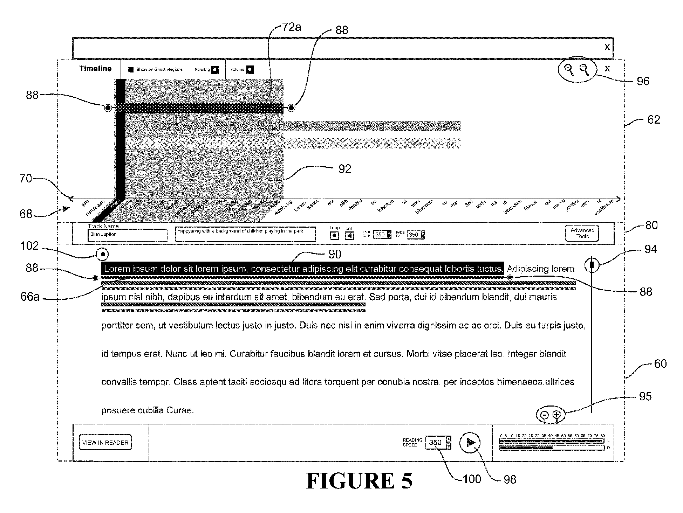

Referring to Figure 5, once the desired audio region is selected, the user may edit the audio region configuration by interacting with the audio region summary display pane 80, launching the configuration interface, and/or via direct manipulation of the graphical representations of the selected audio region in either display pane 60,62. For example, the user may reconfigure audio track file, start and stop position of the audio region, the playback effects via the audio summary display pane 80 or configuration interface, but could also edit the start and stop position of the audio region (i.e. the text region to which it relates) by direct manipulation of the associated text underline or bar in either of the display panes 60 or 62. By way of example, in Figure 5, the audio region represented graphically by text underline 66a corresponding bar 72a has been selected. When selected, the soundtrack creation system automatically highlights the associated text region 90 in the reading display pane 60 and highlights the region 92 of the bar chart between the reading position identifiers (i.e. start and stop words) corresponding to the start and end positions of the audio region. Upon selecting an audio region, control handles 88 are presented (appear) at each end of the graphical representations of the audio region in each display pane 60,62. The control handles 88 are manipulatable by the user dragging the handle via the mouse pointer or touch input to alter the text region to which the audio region corresponds. For example, the either or both of the control handles 88 may be moved in position to alter the start and/or stop positions of the audio region. By way of example, the control handles 88 in the linear progression display pane 62 may be moveable laterally along the reading position axis, and movement may be restricted to incremental movements between discrete reading position identifiers (i.e. the handle must relocate on a new word) rather than being continuously slidable along the axis. The control handles 88 in the reading display pane may also be movable to any new discrete word displayed. The control handles 88 can be manipulated to widen or shorten audio region to extend of a wider or shorter text region or move the audio region to a new text region. The soundtrack creation system senses manipulation of the control handles 88 and automatically updates the start and stop positions of the audio region data to reflect the modified position of the start and end points of the graphical representations in either of the display pane 60,62. Alternatively, by way of example, control handles need not necessarily be provided and instead the user can control the highlighted bar 72a or 90 by selecting the beginning, middle or end of the bar to change the start word, shift (e.g. translate) the entire region, or the just change the end word respectively.

The graphical representations of the audio regions in either display pane 60,62 may be uniquely coded with a designated colour or shading or other identifier, which may be automatically or manually selected. In this embodiment, the shading or colouring of an audio region graphical representation is the same in both the reading display pane 60 and linear progression display pane 62 so that a visual association or link between each pair (text underline and bar) of graphical representations for an audio region is provided.

As the user creates, modifiers or edits the audio regions, the soundtrack data file memory is updated with the new, modified or edited audio data ready for outputting the soundtrack data file for storage and/or subsequent user playback once all the audio regions have been configured for edited as required. Alternatively, the soundtrack creation system may be operated to output a multimedia data file comprising both the soundtrack data in combination with the electronic media content data representing the electronic media content.

### Real-time simultaneous update of display panes

The graphical representations of the audio regions in the display panes are generated based on the audio data of the soundtrack in memory, so both display panes simultaneously present the same information, but in different visual formats. As each new audio region is created, or existing audio regions modified or deleted, the graphical representations of the audio regions in each of the display panes 60, 62 are simultaneously updated in real-time. For example, if the length of an audio region is manipulated by the control handles 88 of the text underline in the reading display pane 60, this change will be simultaneously reflected by a change in length in the corresponding bar of the audio region in the linear progression display pane 62 in real time, and vice versa.

### Soundtrack playback preview

At any stage during the soundtrack creation process, the soundtrack creation system may be activated to perform the soundtrack playback preview via a preview control interface 98, which may be in the reading display pane 60 or presented elsewhere in the GUI. When the preview playback is activated, the soundtrack creation system commences playback of the audio regions of the soundtrack with associated properties over an audio output system associated with the hardware system and the audio region regions trigger for playback based on a adjustable reading position variable that represents the user's expected reading position in the electronic media content displayed on the reading display pane 60. This enables the user to test the soundtrack as it is being configured. In this embodiment, the reading position variable traverses or increments the electronic media content at a rate based on a configurable user reading speed setting which is configurable via the user reading speed setting control interface 100. For example, the reading speed setting may be in words per minute (wpm) or any equivalent metric. In this embodiment, a reading position identifier 102 (such as a visible dot, text highlight or marker inline with the text) is provided in the reading display pane 60 and its position corresponds to the position indicated by the reading position variable. The user may alter the position of the reading position identifier 102 to begin the soundtrack playback preview from any desired position in the text displayed in the reading display pane 60.

In Figure 5, the reading position identifier 102 is shown at the start of the reading display pane 60. On commencement of the soundtrack playback preview, the reading position identifier 102 traverses the text in the display pane 60 at a rate based on the user reading speed setting, and may either jump from word to word or alternatively progressively slide across the text. In this embodiment, once the reading position identifier reaches the last word in the display panel 60, the soundtrack playback is configured to continue playing on for the remaining next portion of electronic media content. The system may be selectively operable by the user to either update the display panes to automatically scroll to display the next portion of electronic media corresponding to the playback position of the soundtrack or alternatively the display panes may be operable to prevent any such automatic scrolling. This means that the portion of electronic media content in the display pane can be selected to be statically maintained during the soundtrack preview so the user can make any desired changes to the audio regions for that portion of text, but the soundtrack continues playing on to avoid any abrupt halting that could be distracting to the concentration of the user.

### Navigating the soundtrack- scrolling and zooming

The user may navigate the electronic media content via either the reading display pane 60 or the linear progression display pane, the navigating of the text in either being reflected in both display panes 60, 62. In one approach, the user may operate a scroll slider 94 to traverse the electronic media content and control the portion displayed in the reading display pane 60. Alternatively, any other user input may be used to traverse the electronic media content in the reading display pane, including user input via a scroll wheel on a mouse or page turn buttons or chapter navigation menus may be provided in the reading display pane 60 for example. As the user modifies what portion of the electronic media content they are viewing the reading display pane 60, the range of reading position identifiers (which in this case corresponds to a linear progression of a portion of the text on a reading position axis or timeline) displayed in the linear progression display pane 62 is simultaneously modified to reflect the new portion displayed on the reading display pane 60, to the extent controlled by a zoom setting to be described later. For example, if the user scrolls down on the reading position pane 60, this corresponds to the linear progression of text 68 on the reading position axis 70 scrolling left to expose the new portion of text displayed in the reading display pane 60. In another approach, the user may operate a scroll or position interface provided in the linear progression display pane 62 to scroll or traverse the linear progression of text (i.e. range of words displayed) left or right to a new portion of the electronic media content.

In this embodiment, the linear progression display pane 62 is provided with a zoom interface for configuring a zoom value and this may be in the form of zoom-in and zoom-out buttons 96 as shown, a numerical zoom setting, or zoom scale in alternative control interfaces. The zoom setting controls the portion of the range of the reading position identifiers (linear progression of text) displayed relative to the portion of the electronic media content displayed on the reading display pane 60. In particular, the range of reading position identifiers in the linear progression display pane 62 may equal or match the portion displayed on the reading display pane 60, or may be more or less than that displayed in the reading display pane 60.

In some embodiments, reading display pane 60 may be provided with an operable highlight feature that automatically displays or maintains a highlight overlay in the reading display pane 60 that highlights the portion of electronic media content that corresponds to the portion that is displayed in the linear progression display pane. In alternative embodiments, a separate display pane may provide a document map or overview that highlights or otherwise graphically indicates the portion of the electronic media content that the linear progression display pane 62 is currently displaying.

The reading display pane 60 may also be provided with a zoom interface 95 for controlling the displayed font size of the electronic media content displayed.

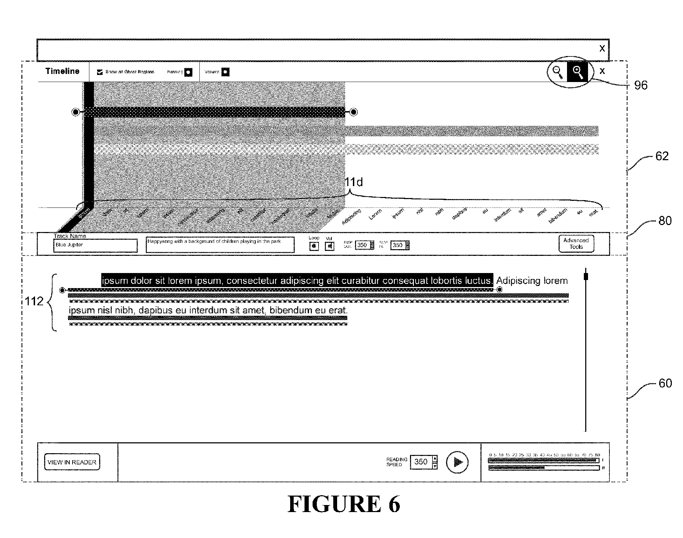

Referring to Figure 6, the default zoom setting may be a 1:1 zoom setting value in which the range 110 of reading position identifiers displayed on the linear progression display pane 62 matches the portion 112 of electronic media content displayed in the reading display pane 60 as shown.

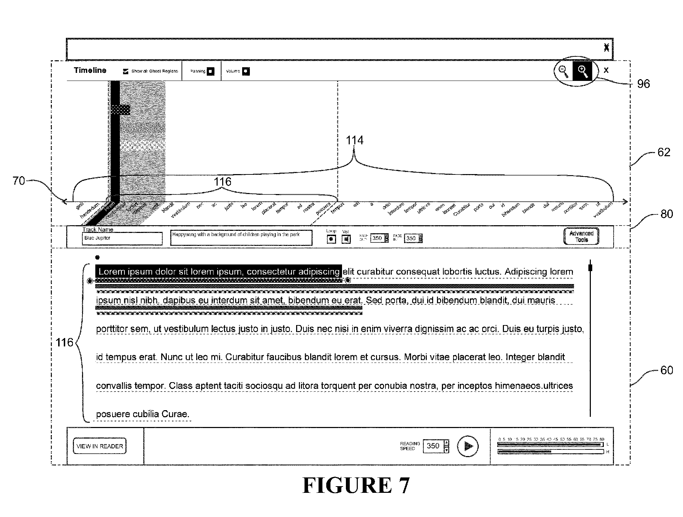

Referring to Figure 7, the user may operate be a zoom control interface 96 to zoom out based on a zoom-out value. When zooming out, the soundtrack creation system responds by displaying a larger range 114 of reading position identifiers in the linear progression display pane 62 relative to the portion of electronic media content 116 displayed in the reading display pane 60. This enables a user to obtain a quick impression of the nature of the configured audio regions for a larger portion of the soundtrack than that corresponding to the portion of electronic media content that is currently displayed on the reading display pane 60. When zoomed out, the labelling resolution of the reading position axis may reduce such that each tick annotation displayed corresponds to a higher frequency of words, for example every 5th or 10^{th} word, rather than each word being displayed along the reading position axis for a default or zoomed in setting.

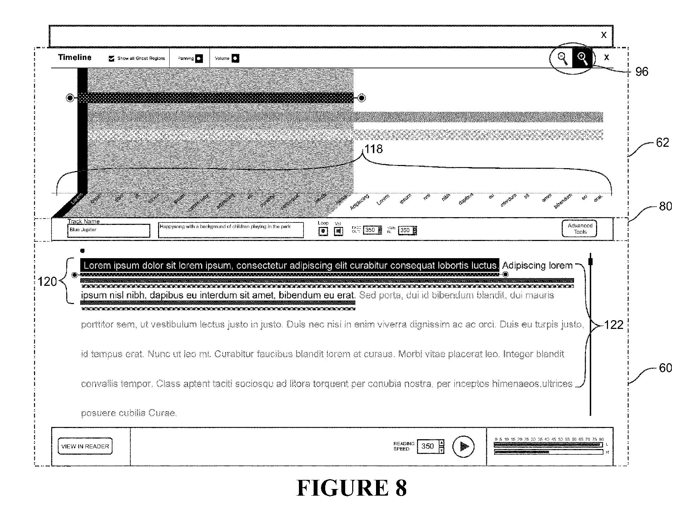

Referring to Figure 8, when zooming in, the soundtrack creation system responds to the user input from the zoom interface 96 by modifying the linear progression display pane 62 to display a smaller range of reading position identifiers 118 corresponding to only a portion 120 of the overall electronic media content 122 displayed in the reading display pane 60. Zooming-in enables a user to focus on a particular text portion of the electronic media content and the audio regions associated with that. In this configuration, the linear progression display pane 62 provides a magnified view for easier editing of the soundtrack, and reading display pane 60 provides more of an overview of the portion or area of the electronic media content.

### Panning and volume envelopes

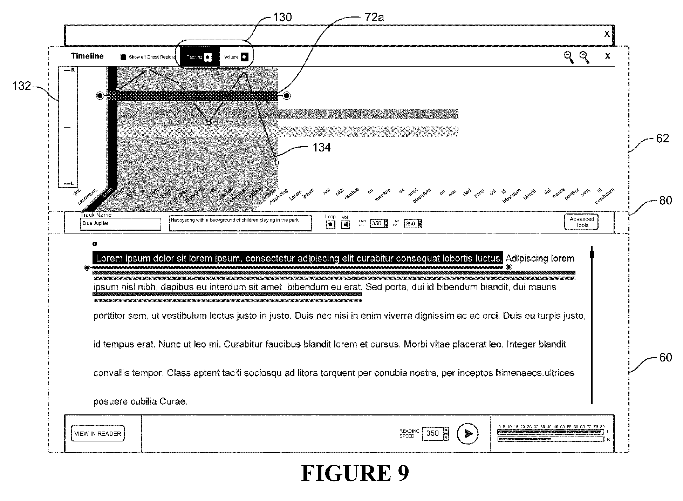

In this embodiment, the linear progression display pane 60 is provided with a playback effect display interface 132 which is operable to selectively display a graphical representation of one or more playback effects that may be configured for an audio region as shown in Figure 9. For example, the audio region may be provided with a panning envelope or volume envelope which controls real-time panning or volume settings applied across the audio region during soundtrack playback. The user may activate the playback effect display interface 132 to show the panning envelope for a selected audio region 72a. Upon activation, the balance scale 132 is displayed along with a line plot 134 overlaying the audio region which represents the panning envelope plotted against the balance scale 132 and along the length of the audio region.

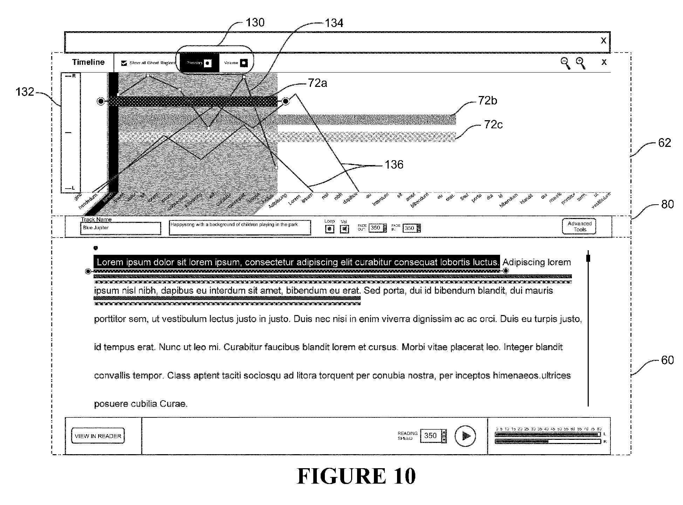

In one form, the linear progression display pane 62 may be operated to show the panning plot 134 only for the selected audio region 72a as shown in Figure 9. In an alternative form, the user may operate the linear progression display pane 62 to also display all panning plots and other effect plots (such as volume envelopes) associated with the unselected audio regions 72b,72c as shown at 136 in Figure 10.

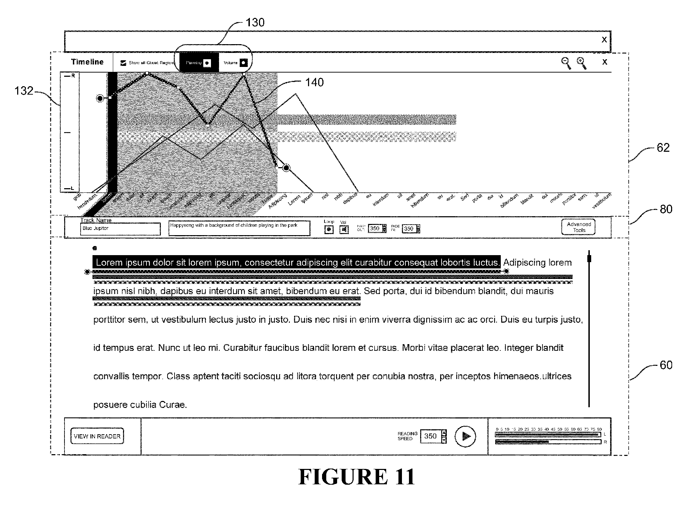

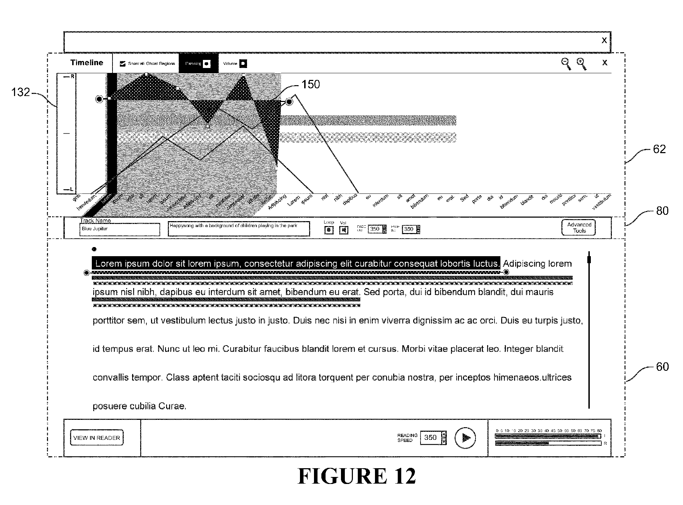

In another form, the panning plot may be integrated with the audio bar such that the audio bar is in the form of the panning plot as shown at 140 in Figure 11. In another another form, the panning envelope may be integrated with the audio region bar as a filled line plot as shown at 150 in Figure 12.

It will be appreciated that similar plots may be displayed for volume envelopes or other playback effect settings, and may be displayed together or individually as desired and can be overlaid on top of the other audio regions as shown or could expand to be shown inline with the other audio regions and sit above or below the selected region but not overlap the other regions.

### 3D surround sound properties

In some embodiments, each audio region may be further configured with sound direction properties using Virtual Acoustic Space (VAS) so as to configure the sounds to appear to the user as originating from a virtual sound source. For example, the sound direction properties may dictate the 3D position relative to the center of the user's head from which the sound should appear to originate, i.e. its virtual sound source direction or location. The direction vector to the virtual sound source may be provided by polar co-ordinates, Cartesian co-ordinates, or any other directional referencing scheme. In one example, the sounds may be configured to originate in a horizontal plane relative to the center of the user's head from any direction from 0° to 360°. Additionally, a vertical component of the direction vector may be defined between -90° to 90°. The virtual sound source location may be configured by an operable graphical interface displayed for each audio region, in either display pane, or alternatively during the pop-up display window for configuring the audio properties for an audio region. The operable interface may be in the form of a slider scale or numerical input for configuring the virtual sound source angular direction.

Any such 3D sound properties configured for an audio region may be displayed and/or graphically represented alongside or within the audio region graphical representations in either or both display panes 60,62.

### Waveforms

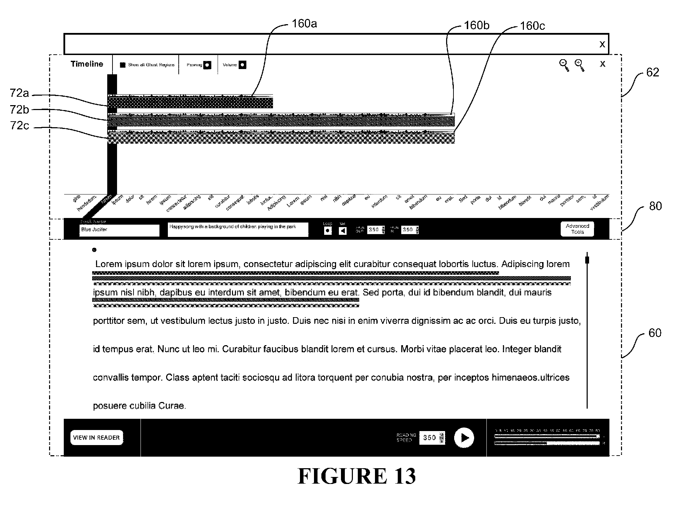

Referring to Figure 13, the user may operate the linear progression display pane 62 to display the spectral waveforms of the configured audio track file selected for the audio region alongside the audio region bar. In this embodiment, the waveforms 160a-160c are displayed on top of their respective audio region bar 72a-72c. Alternatively, the spectral waveforms may be integrated with the audio region bar, such as displayed within the audio region bars in an alternative embodiment.

### Practical examples

The soundtrack creation system may be utilised to create a soundtrack for any form of electronic media content as previously described. However a few practical examples will be provided by way of context.

In a first example, the user baby may operate the soundtrack creation system to generate a soundtrack for an e-book (e.g. a fiction or non-fiction book). In operation, the user loads their e-book file into the soundtrack creation system which processes the file and renders the text on the reading display panel 60 and the linear progression display pane 62. The user may then traverse the text and create new audio regions for desired text regions, which might be a single word, sentence, paragraph or any arbitrary text region, as previously discussed and generate an output soundtrack data file. The soundtrack data file can then be played back over a soundtrack playback system of the type described in WO2013/015694 which can co-ordinate the playback timing of the audio regions based on the user's reading speed and/or reading position.

In a second example, the user may create a soundtrack for webpage content. In this example, the user may load the HTML or webpage data file into the soundtrack creation system which extracts the electronic text and/or imagery and renders that on the display panes 60,62. The text in the reading display pane 60 may be in a similar layout to that displayed if the webpage where viewed in an Internet browser. Again, the text may be traversed and desired audio regions created to generate a soundtrack for the webpage that can be playback at a timing synchronized with the user's reading speed.

In a third example, the user may generate their own electronic text by entering text directly into an a text editable reading display pane 60 and then create a soundtrack for their own item of literary work, such as a short story for example.

### Different forms of electronic media content

The embodiments described above are predominantly for electronic media content comprising text only. However, it will be appreciated that the soundtrack creation GUI may be adapted for electronic media content comprising text and embedded imagery (static and/or videos). When the electronic media content comprises images, they may be represented in their usual form in the reading display pane 60, and may be represented graphically as icons, symbols or notations along the reading display axis of the linear progression display pane 62 at their corresponding positions amongst or interlaced with the other text-based reading position identifiers. For example, each image may stretch or extent over a number of ticks, the number corresponding or being proportional to the length of time the user is expected to view the image, e,g. static picture, or the length of the video. The position of each image representation along the reading display axis corresponds to the position of the image relative to the text-based reading position identifiers corresponding to the text surrounding the image in the reading format. For example, if an image is presented before the start of a sentence, then the image representation of the image in the reading display axis is depicted at the tick or ticks preceding the tick corresponding to the reading position identifier (e.g. word) corresponding to the start of the sentence. The audio regions may be configured to playback during an image or over a series of images, as will be appreciated, and audio region graphical representations may be displayed alongside the image or images in the display panes 60,62 in a similar manner to audio regions for text.

### Different languages

The embodiments described above are described primarily in relation to electronic media content comprising English language text in which the text is displayed in the reading display pane 60 as horizontal rows, and along a horizontally oriented reading position axis in the linear progression display pane 62. For other languages like Japanese, the text may be displayed in vertical rows in the reading display pane 60, and along a vertically oriented reading position axis in the linear progression display pane 62, with the audio region graphical representations also being vertically oriented. It will be appreciated that any orientation or combination of orientations may be employed, and that the orientation used in the reading display pane may be different to the orientation used in the linear progression display pane, if desired.

### Unlinking of display panes

In some embodiments, the display panes 60,62 may be selectively unlinked if desired, such that each is independently operable to navigate the electronic media content, without altering the content displayed in the other pane.

### Advantages of dual display

The dual display pane approach providing two different forms of graphical representation of the audio regions, one integrated with the reading format view in the reading display pane and the other provided in a bar chart format against a linear progression of reading position identifiers enables a user to efficiently and effectively create a soundtrack for an item of electronic media content. In particular, the graphical display of the soundtrack in this multidimensional format provides an instant visual representation and impression of the soundtrack and multiple interfaces for modifying and editing the audio regions as desired. Additionally, the user is able to obtain an impression of the overall soundtrack while working on a particular portion of the soundtrack by the controlling the zoom settings, or alternatively may zoom-in on particular portions of particular focus. The ability to simultaneously display audio playback effects, such as panning or volume envelopes, also enables users to gain an instant impression of the soundtrack being created so that modifications and refinements can be effectively made to improve the soundtrack for the end user.

### Alternative embodiment

In an alternative embodiment, the soundtrack creation system may be configured to display only the linear progression display pane, without the reading display pane or with the reading display pane being optionally displayed.

### 3. Preferred features

Some embodiments of the invention comprise the following preferred features:
1. A method of creating with a hardware system a synchronised soundtrack for an item of electronic media content in which the playback of the soundtrack is synchronised with the users reading speed, the soundtrack comprising multiple audio regions for playback over corresponding text regions of the electronic media content, each audio region being defined by audio data indicative of: an audio track for playback in the audio region; a start position in the electronic media content corresponding to the start of the text region where the playback of the audio region is to begin; and a stop position in the electronic media content corresponding to the end of the text region where the playback of the audio region is to cease, the method comprising: loading an electronic media content data file representing the electronic media content into memory of the hardware system; generating a graphical user interface (GUI) on a display of the hardware system comprising a reading display pane displaying at least a portion of the electronic media content in a reading format and a linear progression display pane displaying a linear progression of a range of reading position identifiers corresponding to at least a portion of the electronic media content displayed on the first display pane; receiving user input from user interaction with the GUI via a user interface of the hardware system for configuring audio data for a new audio region of the soundtrack; updating both the reading display pane and linear progression display pane with graphical representations of the newly configured audio region showing an association between the audio region and the corresponding text region in the electronic media content to which it relates; and updating or generating a soundtrack data file in memory of the hardware system comprising the configured audio data for the new audio region.
2. A method according to paragraph 1 wherein the reading position identifiers of the linear progression display pane are words of the electronic media content.
3. A method according to paragraph 1 wherein the reading position identifiers of the linear progression display pane are characters of the electronic media content.
4. A method according to paragraph 2 or paragraph 3 wherein generating the GUI comprises plotting a range of the words or characters of the electronic media content along a reading position axis of the linear progression display pane.
5. A method according to paragraph 4 further comprising providing the reading position axis with equi-spaced ticks, each tick having a displayed annotation corresponding to a word or character of the electronic media content.
6. A method according to paragraph 5 further comprising providing the reading position axis with a configurable resolution to vary the range of reading position identifiers displayed such that each tick may be configured to correspond to each word or alternatively every n^{th} word, where n > 1.
7. A method according to paragraph 5 or paragraph 6 wherein the electronic media content comprises text and imagery, and wherein the reading position identifiers of the linear progression display pane comprise a combination of words or characters of the electronic media content in combination with symbols or icons or notations representing or corresponding to imagery of the electronic media content, if it comprises both text and imagery.
8. A method according to paragraph 7 wherein the symbol or icon or notation of the reading position identifiers representing or corresponding to each item of imagery are designated to stretch across a number of ticks of the reading position axis, the number being proportional to the length of time the reader is expected to view the image.
9. A method according to any one of the preceding paragraphs wherein the graphical representations of the audio regions in the reading display pane are a different type to the graphical representations of the audio regions in the linear progression display pane.
10. A method according to any one of the preceding paragraphs wherein the graphical representations of the audio regions each have a length component corresponding to the length of their associated audio region.
11. A method according to paragraph 10 wherein each graphical representation of an audio region has a start point and end point corresponding to the start position and stop position in the electronic media content for the text region associated with the audio region, and the length component corresponds to the portion of the electronic media content extending between the start and end points.
12. A method according to any one of the preceding paragraphs wherein the graphical representations of the audio regions in the reading display pane are in the form of underlines within the displayed portion of electronic media content, each underline representing an audio region extending from the start position to the stop position of the text region corresponding to the audio region.
13. A method according to paragraph 12 wherein any overlapping underlines representing overlapping audio regions in the soundtrack are coloured or shaded with a unique colour or shade to enable each to be distinguished.
14. A method according to any one of the preceding paragraphs wherein the graphical representations of the audio regions in the linear progression display pane are displayed in the form of a bar chart, with each audio region represented by a bar plotted relative to the linear progression of reading position identifiers to extend from the start position to the stop position of the text region corresponding to the audio region.
15. A method according to any one of the preceding paragraphs wherein the method further comprises displaying a visual representation of any audio playback effect data configured for each audio region in the linear progression display pane.
16. A method according to paragraph 15 wherein the visual representation of the audio playback effect data is either a separate graphical item displayed alongside the audio region graphical representation, or is integrated with the audio region graphical representation.
17. A method according to any one of the preceding paragraphs wherein the method further comprises displaying a graphical representation of the waveform of the audio track file associated with the audio region in the linear progression display pane.
18. A method according to paragraph 17 wherein the waveform graphical representation is either a separate item displayed alongside the audio region graphical representation, or is integrated with the audio region graphical representation.
19. A method according to any one of the preceding paragraphs wherein the method further comprises receiving user input from the user interface for configuring or editing an audio region via user interaction with either of the first or second display panes, and updating the graphical representations of the re-configured audio region on both display panes simultaneously to reflect any modifications.
20. A method according to paragraph 19 comprising providing either or both of the reading display pane and linear progression display pane with interactive graphical representations of the configured audio regions which are configured to be directly manipulatable on screen to re-configure or edit at least one aspect of the audio data of each audio regions.
21. A method according to any one of the preceding paragraphs wherein the method further comprises receiving user input from the user interface indicative of a configurable zoom setting for the linear progression display pane, and updating the linear progression display pane to alter the range of reading position identifiers displayed relative to the portion of the electronic media content displayed in the reading display pane based on the zoom setting.
22. A method according to any one of the preceding paragraphs wherein the method further comprises providing a preview soundtrack playback of the configured audio regions of the soundtrack over an audio output system associated with the hardware system in which the audio regions of the soundtrack are played back and triggered based on an adjustable reading position variable representing the users expecting reading position in the electronic media content displayed in the reading display pane, the reading position variable traversing the electronic media content at a rate based on a configurable user reading speed setting.
23. A method according to paragraph 22 wherein the method further comprises displaying a graphical reading position identifier in the reading display pane that corresponds to the reading position variable.
24. A method according to paragraph 22 or paragraph 23 wherein the method further comprises continuing the preview soundtrack playback for any remaining non-displayed portion of the electronic media content when the reading position variable reaches the end of the displayed portion of the electronic media content in the reading display pane, with or without displaying the remaining portion of the electronic media content in the reading display pane.
25. A method according to any one of the preceding paragraphs wherein the method further comprises receiving user input from the user interface to change the portion of electronic media content displayed in the reading display pane, and updating the displayed portion of electronic media content in the reading display pane based on the received user input.
26. A method according to paragraph 25 wherein the method comprises simultaneously updating the range of reading position identifiers displayed in the linear progression display pane to correspond or match the new portion of electronic media content displayed on the reading display pane.
27. A method according to paragraph 25 or paragraphs 26 wherein the method comprises updating the linear progression display pane to reflect the new portion of media content displayed in the reading display pane based on a configurable zoom setting such that the range of reading position identifiers displayed in the linear progression display pane is selectable to correspond to the same, more than, or less than the portion of electronic media content displayed in the reading display pane based on the zoom setting.
28. A method according to any one of the preceding paragraphs wherein the method further comprises automatically displaying or maintaining a highlight overlay in the reading display pane that highlights the portion of electronic media content that corresponds to the portion that is displayed/represented in the linear progression display pane.
29. A method according to any one of the preceding paragraphs wherein the method further comprises receiving user input from the user interface to highlight a portion of the electronic media content displayed in the reading display pane, and updating both the reading display pane and linear progression display pane to simultaneously highlight the selected electronic media content.
30. A method according to any one of the preceding paragraphs wherein the method further comprises receiving user input from the user interface to alter the start and/or stop positions of an audio region, and updating the audio data to reflect the altered start and/or stop positions based on the user input.
31. A method according to paragraph 30 wherein the graphical representations of the audio regions in the reading display pane and/or linear progression display pane are provided with interactive handle icons at each end of the graphical representation corresponding to the start and end of the audio region, the handle icons being manipulatable on the screen to alter the start and/or stop positions.
32. A method according to any one of the preceding paragraphs wherein the method further comprises providing an audio region summary display pane in the GUI comprising visual representations of at least a portion of the audio data configured for a selected audio region displayed in the reading display pane and/or linear progression display pane.
33. A method according to any one of the preceding paragraphs wherein the method further comprises receiving user input from the user interface indicative of a selected audio region and updating the reading display pane and linear progression display pane to highlight the portion of the electronic media content and reading position identifiers respectively corresponding to the selected audio region.
34. A method according to paragraph 33 wherein the user input indicative of a selected audio region is achieved through the user selecting on a word or position in the electronic media content displayed on the reading display pane.
35. A method according to paragraph 34 wherein when the selected reading position relates to more than one overlapping audio regions, the method further comprises cycling the selection automatically through each of the overlapping audio regions in turn in response to successive user selection on the word.
36. A method according to any one of the preceding paragraphs wherein the method further comprises receiving user input from user interaction with the GUI via the user interface for configuring multiple audio regions, and updating the reading position display pane and linear progression display pane and the soundtrack data file for each new audio region configured.
37. A method according to paragraph 36 wherein the method further comprises outputting or storing the soundtrack data file once all audio regions of the soundtrack have been configured.
38. A method according to any one of the preceding paragraphs wherein the reading display pane and linear progression display pane are presented in a horizontally split display window.
39. A computer-readable medium having stored thereon computer executable instructions that, when executed on a processing device, cause the processing device to perform the method according to any one of paragraphs 1-38.
40. A soundtrack creation system for creating a synchronised soundtrack for an item of electronic media content in which the playback of the soundtrack is synchronised with the users reading speed, the soundtrack being defined by multiple audio regions, each audio region being defined by audio data indicative of: an audio track for playback in the audio region; a start position in the electronic media content corresponding to where the playback of the audio region is to begin; and a stop position in the electronic media content corresponding to where the playback of the audio region is to cease, the system comprising: a display configured to display the electronic media content; a user interface configured to receive user input; an audio output system that is operable to generate audio output for the user to hear; memory configured to store the soundtrack as it is generated; a processor configured to: load an electronic media content data file representing the electronic media content into memory; generate a graphical user Interface (GUI) on the display comprising a first display pane (reading display pane) displaying at least a portion of the electronic media content in a reading format and a second display pane (linear progression display pane) displaying a linear progression of a range of reading position identifiers corresponding to at least a portion of the electronic media content displayed on the first display pane; receiving user input from user interaction with the GUI via the user interface for configuring audio data for a new audio region of the soundtrack; updating both the first and second display panes with graphical representations of the newly configured audio region showing an association between the audio region and the corresponding text region in the electronic media content to which it relates; and updating or generating a soundtrack data file in memory comprising the configured audio data for the new audio region.

### 4. General

Embodiments of the invention may be implemented by hardware, software, firmware, middleware, microcode, or any combination thereof. When implemented in software, firmware, middleware or microcode, the program code or code segments to perform the necessary tasks may be stored in a machine-readable medium such as a storage medium or other storage(s). A processor may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

In the foregoing, a storage medium may represent one or more devices for storing data, including read-only memory (ROM), random access memory (RAM), magnetic disk storage mediums, optical storage mediums, flash memory devices and/or other machine readable mediums for storing information. The terms "machine readable medium" and "computer readable medium" include, but are not limited to portable or fixed storage devices, optical storage devices, and/or various other mediums capable of storing, containing or carrying instruction(s) and/or data.

The various illustrative logical blocks, modules, circuits, elements, and/or components described in connection with the examples disclosed herein may be implemented or performed with a general purpose processor, a digital signal processor (DSP), an application specific integrated circuit (ASIC), a field programmable gate array (FPGA) or other programmable logic component, discrete gate or transistor logic, discrete hardware components, or any combination thereof designed to perform the functions described herein. A general purpose processor may be a microprocessor, but in the alternative, the processor may be any conventional processor, controller, microcontroller, circuit, and/or state machine. A processor may also be implemented as a combination of computing components, e.g., a combination of a DSP and a microprocessor, a number of microprocessors, one or more microprocessors in conjunction with a DSP core, or any other such configuration.

The methods or algorithms described in connection with the examples disclosed herein may be embodied directly in hardware, in a software module executable by a processor, or in a combination of both, in the form of processing unit, programming instructions, or other directions, and may be contained in a single device or distributed across multiple devices. A software module may reside in RAM memory, flash memory, ROM memory, EPROM memory, EEPROM memory, registers, hard disk, a removable disk, a CD- ROM, or any other form of storage medium known in the art. A storage medium may be coupled to the processor such that the processor can read information from, and write information to, the storage medium. In the alternative, the storage medium may be integral to the processor.

One or more of the components and functions illustrated the figures may be rearranged and/or combined into a single component or embodied in several components without departing from the invention. Additional elements or components may also be added without departing from the invention. Additionally, the features described herein may be implemented in software, hardware, or combination thereof.

In its various aspects, the invention can be embodied in a computer-implemented process, a machine (such as an electronic device, or a general purpose computer or other device that provides a platform on which computer programs can be executed), processes performed by these machines, or an article of manufacture. Such articles can include a computer program product or digital information product in which a computer readable storage medium containing computer program instructions or computer readable data stored thereon, and processes and machines that create and use these articles of manufacture.

The foregoing description of the invention includes preferred forms thereof. Modifications may be made thereto without departing from the scope of the invention as defined by the accompanying claims.

## Claims

1. A method of creating with a hardware system a synchronised soundtrack for an item of electronic media content in which the playback of the soundtrack is synchronised with the users reading speed, the soundtrack comprising multiple audio regions for playback over corresponding text regions of the electronic media content, each audio region being defined by audio data indicative of:
an audio track for playback in the audio region;
a start position in the electronic media content corresponding to the start of the text region where the playback of the audio region is to begin; and
a stop position in the electronic media content corresponding to the end of the text region where the playback of the audio region is to cease, the method comprising:
loading an electronic media content data file representing the electronic media content into memory of the hardware system;
generating a graphical user interface (GUI) on a display of the hardware system comprising a reading display pane displaying at least a portion of the electronic media content in a reading format and a linear progression display pane displaying a linear progression of a range of reading position identifiers corresponding to at least a portion of the electronic media content displayed on the first display pane;
receiving user input from user interaction with the GUI via a user interface of the hardware system for configuring audio data for a new audio region of the soundtrack;
updating both the reading display pane and linear progression display pane with graphical representations of the newly configured audio region showing an association between the audio region and the corresponding text region in the electronic media content to which it relates; and
updating or generating a soundtrack data file in memory of the hardware system comprising the configured audio data for the new audio region.

2. A method according to claim 1 wherein the reading position identifiers of the linear progression display pane are words or characters of the electronic media content, preferably wherein generating the GUI comprises plotting a range of the words or characters of the electronic media content along a reading position axis of the linear progression display pane, preferably further comprising providing the reading position axis with equi-spaced ticks, each tick having a displayed annotation corresponding to a word or character of the electronic media content, preferably further comprising providing the reading position axis with a configurable resolution to vary the range of reading position identifiers displayed such that each tick may be configured to correspond to each word or alternatively every n^{th} word, where n > 1.

3. A method according to any one of the preceding claims wherein the graphical representations of the audio regions each have a length component corresponding to the length of their associated audio region, preferably wherein each graphical representation of an audio region has a start point and end point corresponding to the start position and stop position in the electronic media content for the text region associated with the audio region, and the length component corresponds to the portion of the electronic media content extending between the start and end points.

4. A method according to any one of the preceding claims wherein the graphical representations of the audio regions in the reading display pane are in the form of underlines within the displayed portion of electronic media content, each underline representing an audio region extending from the start position to the stop position of the text region corresponding to the audio region, preferably wherein any overlapping underlines representing overlapping audio regions in the soundtrack are coloured or shaded with a unique colour or shade to enable each to be distinguished.

5. A method according to any one of the preceding claims wherein the graphical representations of the audio regions in the linear progression display pane are displayed in the form of a bar chart, with each audio region represented by a bar plotted relative to the linear progression of reading position identifiers to extend from the start position to the stop position of the text region corresponding to the audio region.

6. A method according to any one of the preceding claims wherein the method further comprises displaying a visual representation of any audio playback effect data configured for each audio region in the linear progression display pane, preferably wherein the visual representation of the audio playback effect data is either a separate graphical item displayed alongside the audio region graphical representation, or is integrated with the audio region graphical representation.

7. A method according to any one of the preceding claims wherein the method further comprises displaying a graphical representation of the waveform of the audio track file associated with the audio region in the linear progression display pane, preferably wherein the waveform graphical representation is either a separate item displayed alongside the audio region graphical representation, or is integrated with the audio region graphical representation.

8. A method according to any one of the preceding claims wherein the method further comprises receiving user input from the user interface for configuring or editing an audio region via user interaction with either of the first or second display panes, and updating the graphical representations of the re-configured audio region on both display panes simultaneously to reflect any modifications, preferably comprising providing either or both of the reading display pane and linear progression display pane with interactive graphical representations of the configured audio regions which are configured to be directly manipulatable on screen to re-configure or edit at least one aspect of the audio data of each audio regions.

9. A method according to any one of the preceding claims wherein the method further comprises receiving user input from the user interface indicative of a configurable zoom setting for the linear progression display pane, and updating the linear progression display pane to alter the range of reading position identifiers displayed relative to the portion of the electronic media content displayed in the reading display pane based on the zoom setting.

10. A method according to any one of the preceding claims wherein the method further comprises providing a preview soundtrack playback of the configured audio regions of the soundtrack over an audio output system associated with the hardware system in which the audio regions of the soundtrack are played back and triggered based on an adjustable reading position variable representing the users expecting reading position in the electronic media content displayed in the reading display pane, the reading position variable traversing the electronic media content at a rate based on a configurable user reading speed setting, preferably wherein the method further comprises displaying a graphical reading position identifier in the reading display pane that corresponds to the reading position variable, preferably wherein the method further comprises continuing the preview soundtrack playback for any remaining non-displayed portion of the electronic media content when the reading position variable reaches the end of the displayed portion of the electronic media content in the reading display pane, with or without displaying the remaining portion of the electronic media content in the reading display pane.

11. A method according to any one of the preceding claims wherein the method further comprises receiving user input from the user interface to change the portion of electronic media content displayed in the reading display pane, and updating the displayed portion of electronic media content in the reading display pane based on the received user input, preferably wherein the method comprises simultaneously updating the range of reading position identifiers displayed in the linear progression display pane to correspond or match the new portion of electronic media content displayed on the reading display pane, preferably wherein the method comprises updating the linear progression display pane to reflect the new portion of media content displayed in the reading display pane based on a configurable zoom setting such that the range of reading position identifiers displayed in the linear progression display pane is selectable to correspond to the same, more than, or less than the portion of electronic media content displayed in the reading display pane based on the zoom setting.

12. A method according to any one of the preceding claims wherein: the method further comprises automatically displaying or maintaining a highlight overlay in the reading display pane that highlights the portion of electronic media content that corresponds to the portion that is displayed/represented in the linear progression display pane; and/or the method further comprises receiving user input from the user interface to highlight a portion of the electronic media content displayed in the reading display pane, and updating both the reading display pane and linear progression display pane to simultaneously highlight the selected electronic media content.

13. A method according to any one of the preceding claims wherein the method further comprises receiving user input from the user interface to alter the start and/or stop positions of an audio region, and updating the audio data to reflect the altered start and/or stop positions based on the user input, preferably wherein the graphical representations of the audio regions in the reading display pane and/or linear progression display pane are provided with interactive handle icons at each end of the graphical representation corresponding to the start and end of the audio region, the handle icons being manipulatable on the screen to alter the start and/or stop positions.

14. A method according to any one of the preceding claims wherein the method further comprises receiving user input from the user interface indicative of a selected audio region and updating the reading display pane and linear progression display pane to highlight the portion of the electronic media content and reading position identifiers respectively corresponding to the selected audio region, preferably wherein the user input indicative of a selected audio region may be achieved through the user selecting on a word or position in the electronic media content displayed on the reading display pane, preferably wherein when the selected reading position relates to more than one overlapping audio regions, the method further comprises cycling the selection automatically through each of the overlapping audio regions in turn in response to successive user selection on the word.

15. A soundtrack creation system for creating a synchronised soundtrack for an item of electronic media content in which the playback of the soundtrack is synchronised with the users reading speed, the soundtrack being defined by multiple audio regions, each audio region being defined by audio data indicative of:
an audio track for playback in the audio region;
a start position in the electronic media content corresponding to where the playback of the audio region is to begin; and
a stop position in the electronic media content corresponding to where the playback of the audio region is to cease, the system comprising:
a display configured to display the electronic media content;
a user interface configured to receive user input;
an audio output system that is operable to generate audio output for the user to hear;
memory configured to store the soundtrack as it is generated;
a processor configured to:
load an electronic media content data file representing the electronic media content into memory;
generate a graphical user Interface (GUI) on the display comprising a first display pane (reading display pane) displaying at least a portion of the electronic media content in a reading format and a second display pane (linear progression display pane) displaying a linear progression of a range of reading position identifiers corresponding to at least a portion of the electronic media content displayed on the first display pane;
receiving user input from user interaction with the GUI via the user interface for configuring audio data for a new audio region of the soundtrack;
updating both the first and second display panes with graphical representations of the newly configured audio region showing an association between the audio region and the corresponding text region in the electronic media content to which it relates; and
updating or generating a soundtrack data file in memory comprising the configured audio data for the new audio region.
